Europäisches Patentamt

European Patent Office

Office européen des brevets

(11) Publication number: **0 294 088**
**A2**

## (12) EUROPEAN PATENT APPLICATION

(21) Application number: 88304723.5

(22) Date of filing: 25.05.88

(51) Int. Cl.⁴: **E21B 17/04 , F16L 19/02 ,**
**//E21B7/04,E21B7/26**

(30) Priority: 02.06.87 US 57292

(43) Date of publication of application:
07.12.88 Bulletin 88/49

(84) Designated Contracting States:
AT BE CH DE ES FR GB GR IT LI LU NL SE

(71) Applicant: FLOWMOLE CORPORATION
21409 72nd Avenue South
Kent Washington 98032(US)

(72) Inventor: Feldman, Dmitry
4130 N.E. 96th
Seattle Washington 98115(US)

(74) Representative: Cross, Rupert Edward Blount
et al
BOULT, WADE & TENNANT 27 Furnival Street
London EC4A 1PQ(GB)

(54) Assembly for and method of coupling adjacent sections of a string of pipes.

(57) A technique is disclosed herein for coupling the joint defined by adjacent ends of a pair of relatively rigid straight pipes forming sections of an overall string of pipes which in operation is intended to bend to a limited extent at the joint. This technique utilizes first and second end segments of the pipes, which end segments respectively include the adjacent ends to be joined and confronting annular faces, actually shoulders, disposed in planes normal to the axes of the pipes. These pipe end segments are joined by a third member, specifically an external nut, such that the confronting faces of the two pipe end segments engage one another and such that when the joint is subjected to limited bending substantially all of the bending forces resulting therefrom are concentrated at the joint in directions parallel with the axes of the pipes, whereby to place the pipe end segments and the joining member in tension only.

FIG.-3

# ASSEMBLY FOR AND METHOD OF COUPLING ADJACENT SECTIONS OF A STRING OF PIPES

The present invention relates generally to techniques for coupling adjacent ends of adjacent pipes or pipe sections and more particularly to a specific technique which is especially suitable for joining the sections of a drill string which in operation is intended to bend to a limited extent as it moves through the ground.

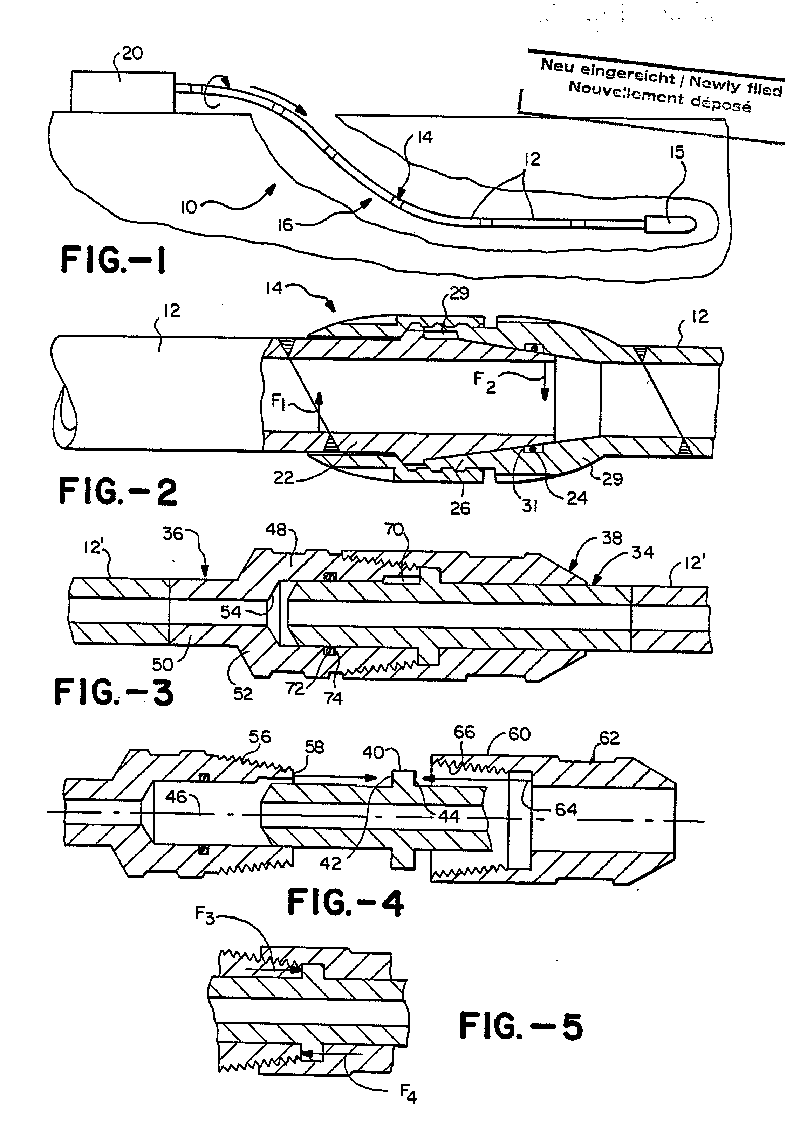

In U.S. Patent Application Serial No. 709,046 to Geller et al., filed March 7, 1985 and assigned to FlowMole Corporation, assignee of the present application, a particular inground drilling assembly is described. Figure 1 in the present application diagrammatically illustrates that assembly which is generally indicated by the reference numeral 10. Assembly 10 includes a plurality of relatively rigid straight pipes 12 which are connected together at adjacent ends by coupling arrangements 14 and which form sections of an overall drill string 16. An underground boring device 18 is connected to the forwardmost end of the drill string and both are urged through the ground from the back end of the drill string by a suitable driving mechanism 20 such as the one described in the commonly assigned Geller et al. patent application.

As shown in Figure 1, during operation of overall assembly 10, it may be necessary for drill string 16 to bend to a limited extent in order to allow boring device 15 to make turns in the soil. Since pipe sections 12 are straight and relatively rigid, the drill string bends at the joints between pipe sections defined by coupling arrangements 14. One such coupling arrangement is illustrated in Figure 2. This coupling arrangement which is described in more detail in the Geller et al. patent application includes a male end segment 22 which forms one end of a pipe section 12 and female end segment 24 which forms the adjacent end of an adjacent pipe section 12 and which is configured to receive male end segment 22. The female end segment also includes an externally threaded outer surface portion 26 which is designed to thread connect with cooperating internal threads an outermost nut 28 which extends concentrically around part of male end segment 22 and the threads of female end segment 24. The nut serves to fixedly connect the two end segments in the position illustrated.

While not pertinent to the present invention, overall coupling arrangement 14 illustrated in Figure 2 is shown including a key 29 disposed within a cooperating keyway defined by the two end sections. This key locks the two pipe sections for rotation about the axis of the coupling arrangement, which is necessary since the entire drill string is intended to rotate during operation of the overall assembly. Also, because fluid under pressure is carried through the drill string, coupling arrangement 14 includes O-ring 30 within a cooperating O-ring groove 32, or any other suitable sealing means.

As indicated previously, the coupling arrangement 14 illustrated in Figure 2 is one which forms part of the overall assembly described in the above-recited Geller et al. patent application. While this coupling arrangement is generally satisfactory for its intended purpose, there have been occasions where the arrangement has failed due to excessive bending loads during normal operation of the drill string. More specifically, applicant has found that when the drill string bends the limited desired amount, at least one joint is subjected to bending forces which are concentrated at the joints in the manner illustrated by arrows F1 and F2 shown in Figure 2. Note that these bending forces extend radially inward with respect to and on opposite sides of the axis of the joint so as to form a bending moment across the overall joint including specifically the male end segment from its free end to the free end of the female end segment. This places a relatively large bending force on the male segment and the threaded connection between the female segment 24 and nut 28, particularly the free end of the male end which is more fragile than any other part thereof, and therefore makes the male segment and threaded connection more susceptible to failure than would be the case if the bending moment were not present.

In view of the foregoing, it is an object of the present invention to provide a coupling arrangement corresponding in function to previously described arrangement 14, but one which is configured so as to reduce the possibility of failure at the joint due to being loads thereat.

A more particular object of the present invention is to provide a coupling arrangement which is configured such that when the drill string bends the limited extent anticipated, the bending forces applied to the coupling arrangement as a result thereof are concentrated in directions parallel with the axis of the arrangement whereby to place its components in tension only and thereby reduce the possibility of failure.

As will be described in more detail hereinafter, the coupling arrangement disclosed herein, like the one illustrated in Figure 2, includes cooperating male and female end segments. However, in accordance with the present invention, these segments including confronting annular faces disposed in planes normal to the axis of the coupling arrangement, and the arrangement itself includes an outermost nut or other suitable means for joining these segments together. The confronting faces engage one another so that when the arrangement is subjected to the anticipated bending forces, substantially all of these forces are concentrated at the joint in directions normal to the confronting faces and therefore parallel to the axis of the coupling arrangement.

In an actual working and a preferred embodiment, an outer nut generally similar to nut 20 in Figure 2 serves as the joining means recited immediately above. However, the nut forming part of the present arrangement and the male end segment include their own confronting annular faces which are disposed in planes normal to the axis of the arrangement and which engage one another in order to further concentrate the bending forces in the manner recited above.

The overall coupling assembly disclosed herein will be described in more detail hereinafter in conjunction with the drawings wherein:

FIGURE 1 diagrammatically illustrates an overall drilling assembly corresponding to one described in the previously recited commonly assigned patent application;

FIGURE 2 is an enlarged, partially broken away longitudinal sectional view of a coupling arrangement forming part of an overall drill string which, in turn, forms part of the overall assembly illustrated in Figure 1;

FIGURE 3 is an enlarged, longitudinal sectional view of a coupling arrangement corresponding in function to the one illustrated in Figure 2 but designed in accordance with the present invention;

FIGURE 4 is a further enlarged exploded (unassembled) view of end components making up the coupling arrangement of Figure 3; and

FIGURE 5 is an enlarged view corresponding to the portion of the arrangement shown in Figure 3 but specifically illustrating all certain bending forces are applied to the arrangement.

Turning now to the drawings, wherein like components are designated by like reference numerals throughout the various figures, attention is immediately directed to Figures 3-5, inasmuch as Figures 1 and 2 have been discussed previously. Figure 3 illustrates a coupling arrangement 32 which corresponds generally in function to previously described coupling arrangement 14 but which is designed in accordance with the present invention. Like arrangement 14, arrangement 32 includes a male segment 34 welded or otherwise suitably connected to one end of a pipe section 12' forming part of an overall string of pipes such as drill string 16 and a female segment 36 similarly connected to an adjacent end of an adjacent pipe section 12'. As will be seen below, the female end segment is configured to receive the male end segment and the two are held together tightly by means of an external nut 38 which will also be described below.

As best illustrated in Figure 4, in conjunction with Figures 3 and 5, male end segment 34 includes a radially outwardly extending outer circumferential flange 40 which defines opposing annular shoulders 42 and 44 disposed in planes normal to the axis 46 of the coupling arrangement. Annular face 42 is directed towards the free end of male segment 34 while face 44 is directed toward its connected end.

Female segment 36 is best shown in Figure 3 including an endmost enlarged portion 48 and a reduced portion 50 joined by a tapered portion 52 which defines forward facing internal shoulder 54. Enlarged portion 48 is externally threaded at 56 and includes a forwardmost annular face 58 disposed in a plane normal to coupling axis 46.

Outer nut 38 includes an enlarged portion 60 and a reduced portion 62 which together define an internal annular shoulder or face 64 disposed in a plane normal to coupling axis 46. In addition, the enlarged portion 60 is internally threaded at 66.

Having described each of the major components making up coupling arrangement 32, that is, male segment 34, female segment 36 and outer nut 38, attention is directed to the way in which these components are assembled together to meet the objectives of the present invention. Specifically, as illustrated best in Figures 3 and 5, male segment 34 extends into female segment 36 sufficient to cause annular face 58 of the female segment to engage confronting face 42 of flange 40. Note specifically in Figure 5 that the full face 58 engages squarely against the full face 42. Note that the nut 38 is prepositioned over male segment 34 behind flange 40 before the male segment is fixedly connected to its pipe section 12'. With the male and female segments positioned in this manner the enlarged portion 60 of nut 38 is thread-connected around the externally threaded portion of female segment 36 until its internal annular face 64 tightly engages confronting face 44 of flange 40. Note that the entire face 64 engages squarely against the entire face 44 and the interaction between the threaded portions of the nut and female segment actually squeeze the faces 58 and 64 tightly against faces 42 and 44, respectively.

Referring specifically to Figure 5, the assembled coupling arrangement is shown subjected to bending forces F3 and F4 resulting from bending action of the drill string at that arrangement. Note specifically as the joint between the adjacent pipe sections 12' bends to accommodate bending of the drill string, the bending forces (e.g., bending forces F3 and F4) are concentrated at the confronting faces 42, 58 and 44, 64 in equal and opposite directions parallel to and on opposite sides of coupling axis 46. This places the male and female segments and the nut in tension only in contrast to the bending stresses on male segment 20 forming part of overall coupling arrangement 14. As a result, the possibility of mechanical failure to the overall arrangement and to the male segment in particular is reduced as compared to arrangement 14.

Because overall coupling arrangement 32 is intended to function generally in the same manner as arrangement 14, like arrangement 14, it includes a rotation coupling key 70 in a cooperation keyway defined by the male and female pipe segments. The key itself is preferably cylindrical in cross section (although it could vary in cross section) and the keyway preferably a blind keyway, that is, it is not visible even with the nut 38 removed. Also, the male and female segments include a cooperating O-ring seal 72 in its own cooperating annular groove 74. While overall coupling arrangement 32 has been described as part of an overall drill string, it is to be understood that it can be equally appropriate for use in other strings of pipes other than drill strings. Also, each of the components making up the arrangement can be constructed of any suitable material, although the male and female segments 32 and 36 and nut 38 are to be constructed of a rigid or relatively rigid material, for example, steel.

## Claims

1. An assembly for coupling the joint defined by adjacent ends of a pair of relatively rigid straight pipes forming sections of an overall string of pipes which in operation is intended to bend to a limited extent at said joint, said assembly comprising:

(a) first and second end segments of said pipes respectively including said adjacent ends and having confronting annular faces disposed in planes normal to the axes of the pipes; and

(b) means for joining said end segments such that said confronting faces engage one another and such that, when said joint is subjected to said limited bending, substantially all of the bending forces resulting therefrom are concentrated at the joint in directions parallel with the axes of said pipes, whereby to place said pipe end segments and said joining means in tension only.

2. An assembly according to Claim 1 wherein said joining means and said first pipe end segment include second confronting annular faces disposed in planes normal to the axes of said pipes and in engagement with another and wherein said bending forces are concentrated at said first-mentioned and said second confronting faces in equal and opposite directions on diametrically opposite sides of the axes of the pipe.

3. An assembly according to Claim 2 wherein said first pipe end segment extends within said second pipe end segment and includes an outer circumferential flange having opposing annular shoulders, one of which defines one of said first annular faces and the other of which defines one of said second annular faces.

4. An assembly according to Claim 3 wherein said second pipe end segment includes a threaded outer circumferential portion and a frontmost end defining the other of said first annular faces, and wherein said joining means includes a threaded inner circumferential portion thread-connected around the threaded portion of said second pipe end segment and an inner annular shoulder defining the other of said second annular faces.

5. An assembly according to Claim 4 wherein the axial length of said first pipe end segment is such that its frontmost end does not engage said second pipe end segment.

6. An assembly according to Claim 4 wherein said first and second pipe end segments together define a common buried keyway and wherein said assembly includes a pin disposed within said keyway so as to couple said segments together for rotation about the axes of the pipes.

7. An assembly according to Claim 6 wherein said pin is cylindrical in cross section.

8. An assembly according to Claim 4 including seal means between said first and second pipe end segments.

9. An assembly according to Claim 4 wherein said first and second pipe end segments are initially separate members from the rest of said pipes but respectively fixedly connected with the latter.

10. An assembly according to Claim 4 wherein said overall string of pipes is a drill string.

11. A method of coupling the joint defined by adjacent ends of a pair of relatively rigid straight pipes forming sections of an overall string of pipes which in operation is intended to bend to a limited extent at said joint, said method comprising the steps of:

(a) providing first and second end segments of said pipes respectively including said adjacent ends and having confronting annular faces disposed in planes normal to the axes of the pipes; and

(b) joining said end segment such that said confronting faces engage one another and such that when said joint is subjected to said limited bending substantially all of the bending forces resulting therefrom are concentrated at the joint in directions parallel with the axes of said pipes, whereby to place said pipe end segments and said joining means in tension only.

12. A method according to Claim 11 wherein said first and second pipe end segments are joined such that said bending forces are concentrated at said joint in equal and opposite directions on diametrically opposite sides of the axes of the pipe.

13. An assembly for coupling adjacent ends of a pair of relatively rigid pipes forming sections of an overall drill string which in operation within the ground is intended to bend, to a limited extent, at said adjacent ends, said coupling assembly comprising:

(a) a first, male pipe segment including

(i) a straight, relatively rigid body having one end fixedly connected with one of said adjacent ends of said rigid pipes and an opposite free end, and

(ii) a flange extending around and fixedly connected with the outer surface of said pipe segment body so as to define a first annular shoulder coaxial with said body and facing its free end and an opposite second annular shoulder coaxial with said body and facing its connected end;

(b) a second, female pipe segment including

(i) a straight, relatively rigid body having one end fixedly connected with the other of said adjacent ends of said rigid pipes and an opposite free end which defines a frontmost annular face and which is concentrically disposed within said male pipe segment body through the free end of the latter so that its frontmost annular face engages against said first annular shoulder, and

(ii) external threads on an outer circumferential portion of said female pipe segment body; and

(c) a nut positioned concentrically around a portion of said male pipe segment body and having an internally threaded portion thread connected with the threaded portion on said female pipe segment body and internal annular shoulder in engagement with said second annular shoulder of said flange, whereby to maintain the frontmost face of said female pipe segment body against said first annular shoulder of said flange.

EP 0 294 088 A2

Neu eingereicht / Newly filed
Nouvellement déposé

**FIG.—1**

**FIG.—2**

**FIG.—3**

**FIG.—4**

**FIG.—5**